Europäisches Patentamt

European Patent Office

Office européen des brevets

(11) Publication number: **0 262 763**
**A2**

## (12) EUROPEAN PATENT APPLICATION

(21) Application number: **87306392.9**

(51) Int. Cl.⁴: **F16G 11/14**

(22) Date of filing: **20.07.87**

(30) Priority: **30.07.86 GB 8618532**
**16.01.87 GB 8701042**

(43) Date of publication of application:
**06.04.88 Bulletin 88/14**

(84) Designated Contracting States:
**AT BE CH DE ES FR GB GR IT LI LU NL SE**

(71) Applicant: **Harness, Cecil**
**Yew Tree House Halford**
**Shipston-upon-Stour Warwickshire CV36**
**5BT(GB)**

(72) Inventor: **Harness, Cecil**
**Yew Tree House Halford**
**Shipston-upon-Stour Warwickshire CV36**
**5BT(GB)**

(74) Representative: **Adkins, Michael et al**
**Withers & Rogers 4 Dyer's Buildings**
**Holborn London, EC1N 2JT(GB)**

(54) **A retainer for rope or the like.**

(57) The present invention relates to a retainer for rope comprising two spaced apart rope guide sections, and a reaction surface between the guide sections whereby, in use, the rope passes through the guide sections and an element passes over the reaction surface so as to deflect the rope transversely whereby axial movement of the rope through the retainer is inhibited.

EP 0 262 763 A2

# A RETAINER FOR ROPE OR THE LIKE

The invention relates to a retainer for rope, cable or the like (hereinafter called "rope").

It is normal practice to secure a rope by conventional knots and lashings. However, such a mehtod of retaining rope can be tedious and sometimes unreliable and an object of the present invention is to provide a simple form of retainer for rope which avoids the need for knots.

According to a first aspect of the invention there is provided a retainer for rope comprising two spaced apart rope guide sections, and a reaction surface between the guide sections whereby, in use, the rope passes through the guide sections and an element passes over the reaction surface so as to deflect the rope transversely whereby axial movement of the rope through the retainer is inhibited.

The reaction surface may comprise an edge having a portion arranged to extend transversely of the rope.

Preferably a pair of reaction surfaces is provided. In such a case, the two reaction surfaces may be spaced apart so as to lie one each side of the rope axis.

The element may comprise a tail portion of said rope.

The reaction surface may include a section which frictionally engages the deflected portion of the rope.

Preferably the retainer is tubular. In such a case said reaction surface may be defined by an edge of an aperture formed in a wall of the tube. Preferably, the aperture is formed so as to define substantially arcuate edge sections. The formation of the aperture leaves end sections of the tube which preferably define said guide sections. The edge sections preferably extend so that the aperture is of gradually increasing width as it increases in depth.

The aperture is preferably formed so that with the element in position over the reaction surfaces formed by the aperture, a recess is formed between the deflected portion of the rope and the reaction surfaces which converge towards each guide section.

According to a second aspect of the invention there is provided a retainer for rope comprising two spaced apart rope guide sections, and a reaction surface between the guide sections whereby, in use, the rope passes through the guide sections and an element passes over the reaction surface so as to deflect the rope tranversely whereby axial movement of the rope through the retainer is inhibited, in which at least one rope guide section is formed by an elongate section of material defining at least a partial loop.

Preferably both of the rope guide sections are formed from elongate sections of material.

Preferably, the entire retainer is formed from an elongate section of material. Preferably, the ends of the elongate sections forming the retainer are joined together.

The material may be rod, bar or wire.

Two reaction surfaces may be provided. In such a case, the reaction surfaces may be provided by first and second portions of the material arranged, in use, to lie one each side of the axis of the rope.

The first and second portions defining the reaction surfaces may be substantially parallel with each other. Alternatively, the first and second portions defining the reaction surfaces may be arcuate.

The loops may be transverse to the reaction surface or surfaces.

Rope retainers in acordance with the invention will now be described by way of example with reference to the accompanying drawings in which:

Figs. 1,2 and 3 are respectively plan, elevation and end views of a rope retainer in accordance with said one aspect of the invention;

Fig. 4 is a perspective view of the rope retainer of Figs. 1 to 3;

Figs. 5 and 6 illustrate the way in which the retainer of Figs. 1 to 4 can be used to secure a rope to a bar;

Figs. 7 and 8 illustrate the way in which the retainer of Figs. 1 to 6 can be used to retain a tail of the rope to form a loop;

Fig. 9 illustrates the way in which the retainer of Figs. 1 to 8 can be used to secure a rope to a shackle pin; and

Fig. 10 illustrates the use of two rope retainers as shown in Figs 1 to 9 in tandem retaining a tail of the rope.

Fig. 11 is a plan view of one form of rope retainer in accordance with said second aspect of the invention;

Fig. 12 is an end view of the rope retainer shown in Fig. 11;

Fig. 13 is an elevation of the rope retainer shown in Figs. 11 and 12 in use with a rope;

Fig. 14 is a plan view of an alternative embodiment of rope retainer in acordance with the said second aspect of the invention;

Fig. 15 is an end view of the rope retainer shown in Fig. 14;

Fig. 16 is an elevation of the rope retainer shown in Figs. 14 and 15.

Fig. 17 is a plan view of the retainer shown in Fig. 11, 12 and 13 showing alternative rope threading.

Fig. 18 is an elevation of the rope retainer shown in Fig. 17.

Fig. 19 is a side view of another rope retainer in accordance with the invention.

Fig. 20 is a plan view of the retainer shown in Fig. 20; and

Fig. 21 shows the retainer of Figs. 19 and 20 in use.

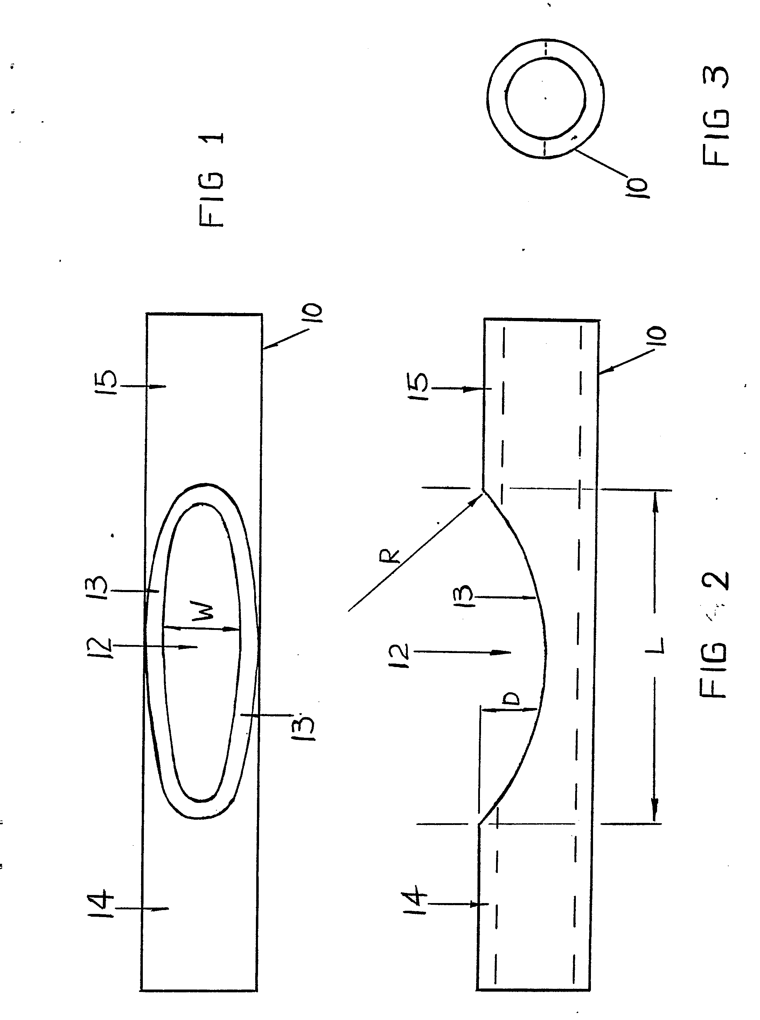

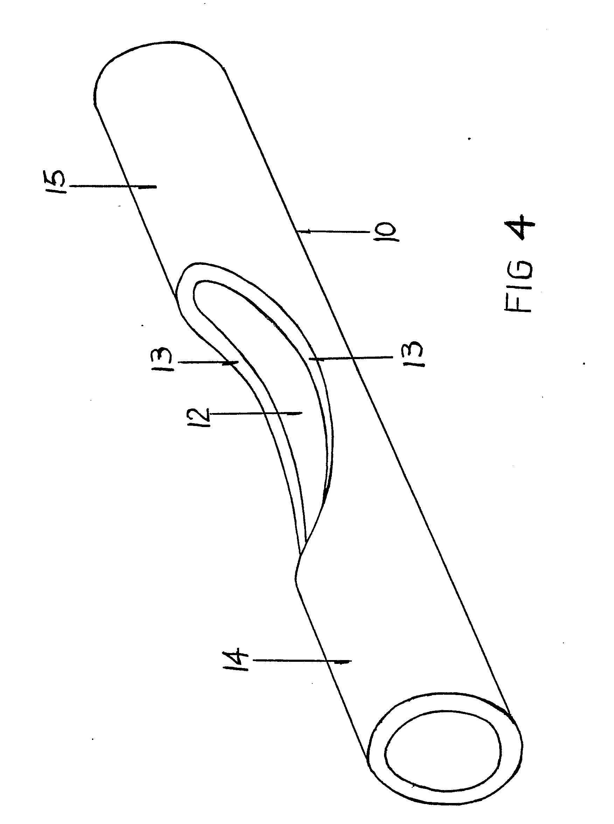

With reference to Figs. 1 to 4, the retainer comprises a tube 10 e.g. of plastics or metal having an arcuate cut-out in its wall which which forms an aperture 12. Edge sections B of the aperture define the aforesaid reaction surfaces and the aperture increases in width W as it increases in depth D. The formation of the aperture 12 leaves two guide sections 14,15 through which rope passes, in use, with working clearance.

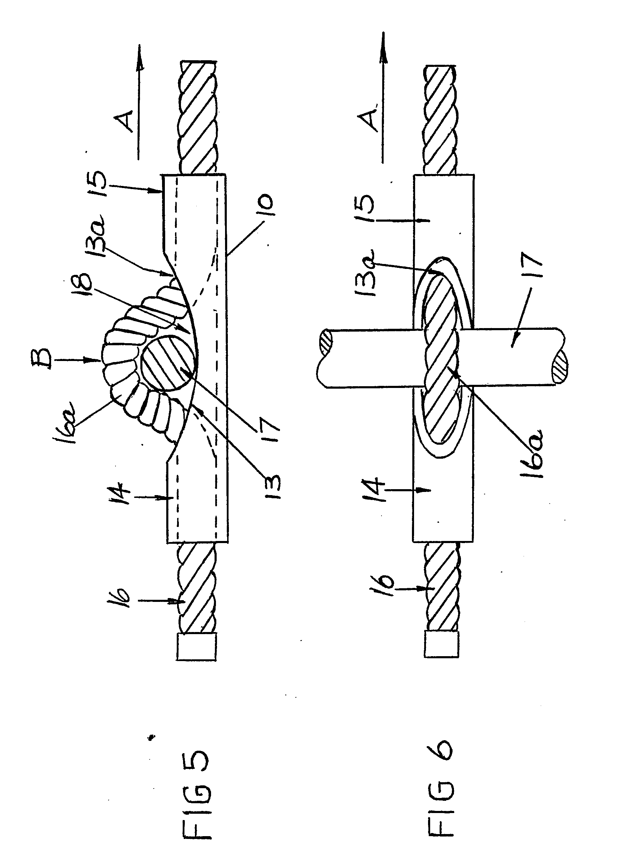

Referring now to Figs. 5 and 6, rope 16 is threaded through the guide sections 14,15 and a section 16a is drawn through the aperture to enable a bar 17 to be passed between the rope and the edge sections or reaction surfaces 13. With the bar 17 held stationary, tension applied to the rope 16 in direction of arrow A will tend to reduce the length of the rope section 16a thereby urging the bar 17 in direction B against reaction surfaces 13. Also, a recess 18 is defined substantially between the rope section 16a and the adjacent reaction surfaces 13 which converges towards the guide section 14. Tension applied to the rope in direction A also tends to urge the bar 17 in direction A into the converging recess 18 so as to increase further the reaction between the surfaces 13 and the bar 17. The arcuate surfaces 13 effectively provide edges which become progressively steeper and which, together with the rope section 16a, provide a wedging effect on the bar 17. As the rope section 16a is deflected by the bar 17 transversely of the rope sections within guide sections 14,15, tension in direction A will cause the rope section 16a to bite into an end section 13b of the aperture. The biting effect will increase as the bar 17 moves in direction A thereby increasing an angle of bend of the rope section 16a. The biting action reduces the likelihood of the rope 16 slipping axially in the retainer.

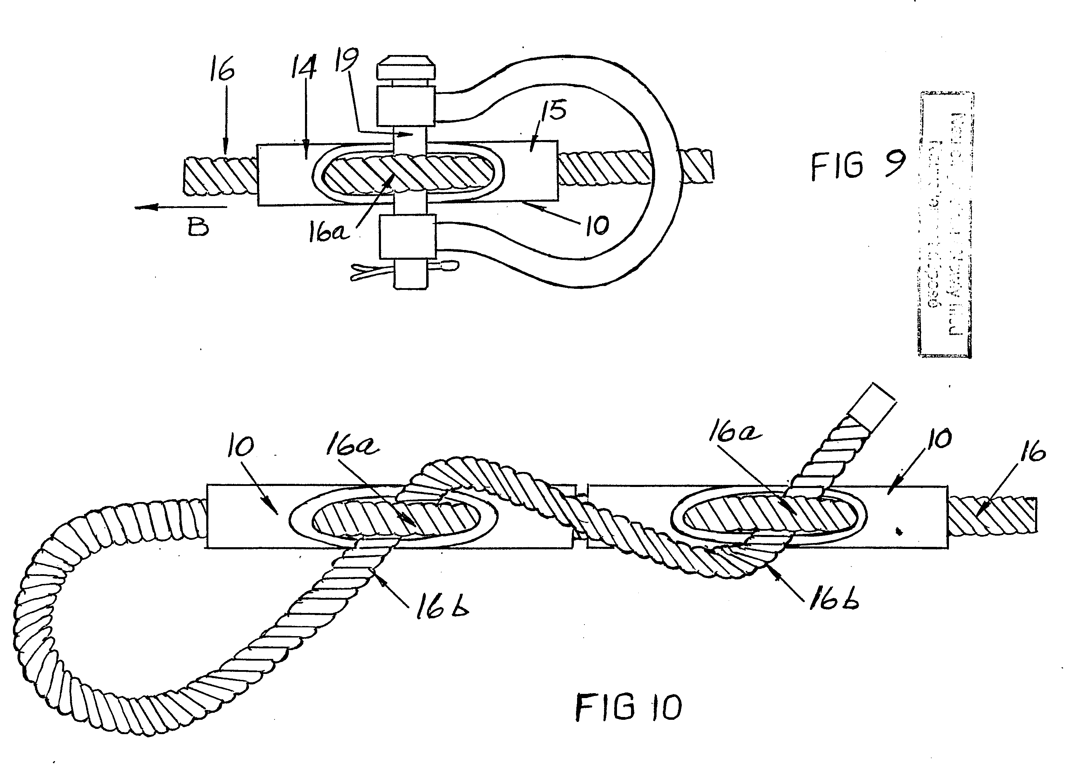

As shown in Fig. 9, the bar 17 may take the form of a shackle pin 19. In Fig. 9 the rope tension is applied in direction B.

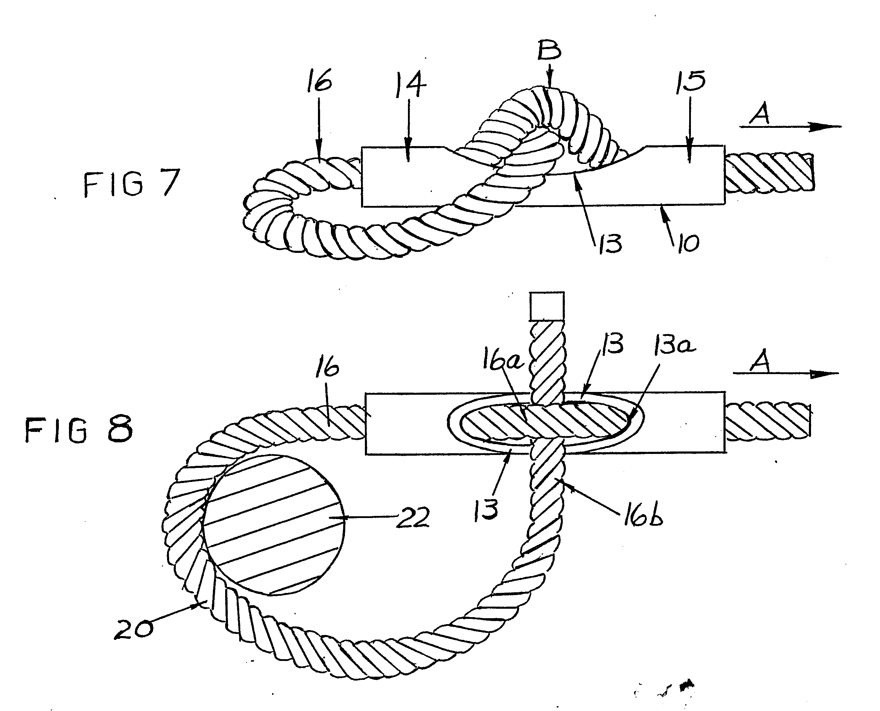

Figs. 7 and 8 show the way in which a tail portion 16b of the rope can be passed between the rope section 16a and the reaction surfaces 13 to form a loop 20. The loop 20 may extend around, say, a mooring post 22 for a boat. When tension is applied to the rope in direction A, the load created in direction B forces the rope tail portion 16b against reaction surfaces 13 so that the surfaces actually bite into the rope providing a very strong retention characterised in preventing withdrawal of the tail portion 16b from between the rope section 16a and the reaction surfaces 13. As in Figs. 5 and 6, the rope section 16a will bite into the edge 13a to inhibit slippage of the rope.

Fig. 10 shows the way in which two retainers of the kind shown in Figs. 1 to 3 can be arranged in tandem on a rope 16. Two tail end sections 16b of the rope are passed beneath respective sections 16a. Such an arrangement provides additional resistance to slip of the rope when tension is applied.

For a retainer which is to secure ropes of man-made fibres, typical dimensions may be as follows:

Length of tube 10 8 $^\times$ rope diameter.
Tube wall thickness 4.5 - 5.00 mm.
Tube bore 1.24 - 1.25 $^\times$ rope diameter.
Maximum depth D 0.4 - 0.45 $^\times$ tube outside diameter.

Radius R = 4 $^\times$ rope diameter.

For rope of natural fibres, such as manilla, typical dimensions may be as follows:

Length of tube 8 $^\times$ rope diameter.
Tube wall thickness 4.5 - 5.00 mm.
Tube bore 1.24 - 1.25 $^\times$ rope diameter.
Maximum depth D 0.5 - 0.55 $^\times$ tube outside diameter.

Radius R = 4 $^\times$ rope diameter.

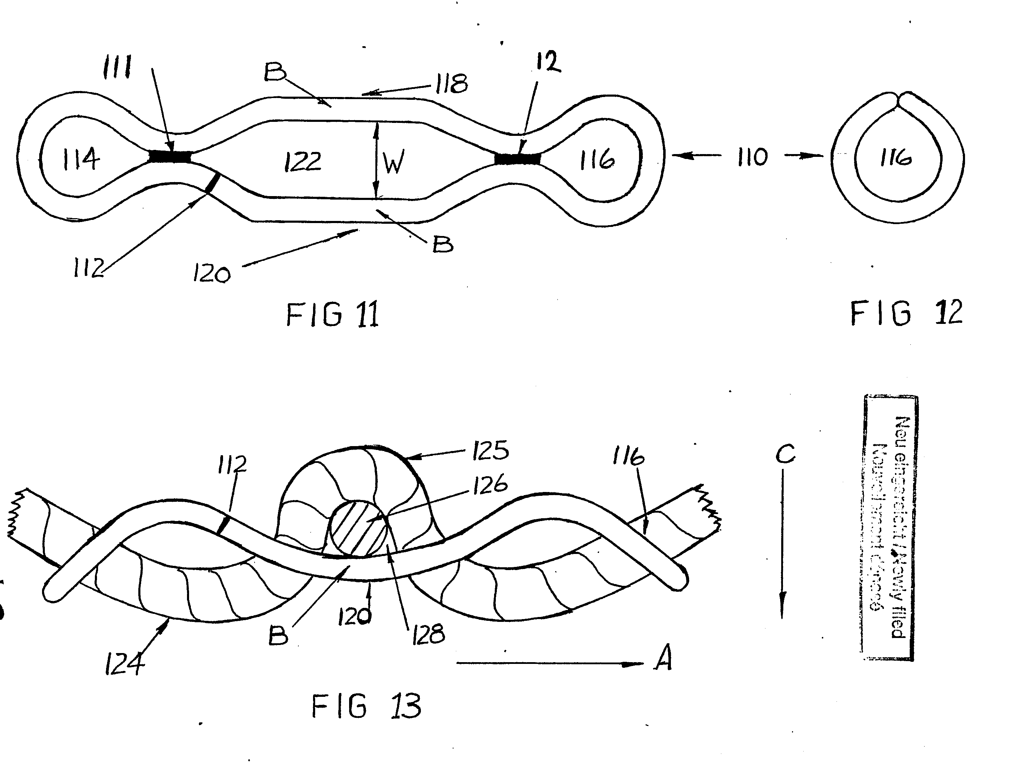

The rope retainer 100, shown in Figs. 11,12 and 13, which is particularly for use with ropes of up to about 1.2 cm. in diameter, is formed from a length of 0.45 cm. diameter stainless steel wire, bar or rod (hereinafter called "wire"), buttwelded at 112. The wire is bent to define spaced loops 114 and 116 each of about 1.9 cm. in internal diameter and which constitute the aforementioned rope guide sections. In use, rope passes through the loops with working clearance. The retainer 100 further comprises spaced lengths of wire 118 and 120 whcih define an aperture 122 therebetween having a width W of about 1.9 cm to allow rope to pass through with working clearance. The opposed ends of lengths 118 and 120 are interconnected at 111 and 112, e.g. by welding, thereby enhancing the strength of the retainer. The upper surfaces B of the lengths 118 and 120 as viewed in Fig. 3 provide the aforementioned reaction surfaces. The lengths 118 and 120 forming the reaction surfaces are parallel.

Referring now in particular to Fig. 13, a rope 124 is threaded through the loops 114 and 116 and a section 125 of the rope is drawn through the aperture 122 between lengths 118, 120 so that an end

126 of the rope can be passed between the section 125 and the reaction surfaces B. With the end of the rope 126 held stationary, tension applied to the rope 124 in the direction of arrow A will tend to reduce the length of the rope section 125 thereby trapping the end 126 against the reaction surfaces B and inhibiting axial movement of the rope through the retainer.

Additionally, the tension applied to the rope, e.g. in the direction of arrow A tends to urge the end 126 in that direction into a wedge shaped recess 128 defined by surfaces of the rope section 125 and the reaction surface B thereby increasing the reaction between the reaction surfaces B and the end 126.

Furthermore, as the end 126 of the rope is urged against the reaction surface B the latter surfaces bite into the rope thereby further increasing the reaction between the reaction surfaces and the end 126.

Thus, tension on the rope 125 in the direction of arrow A inhibits further axial movement of the rope through the retainer.

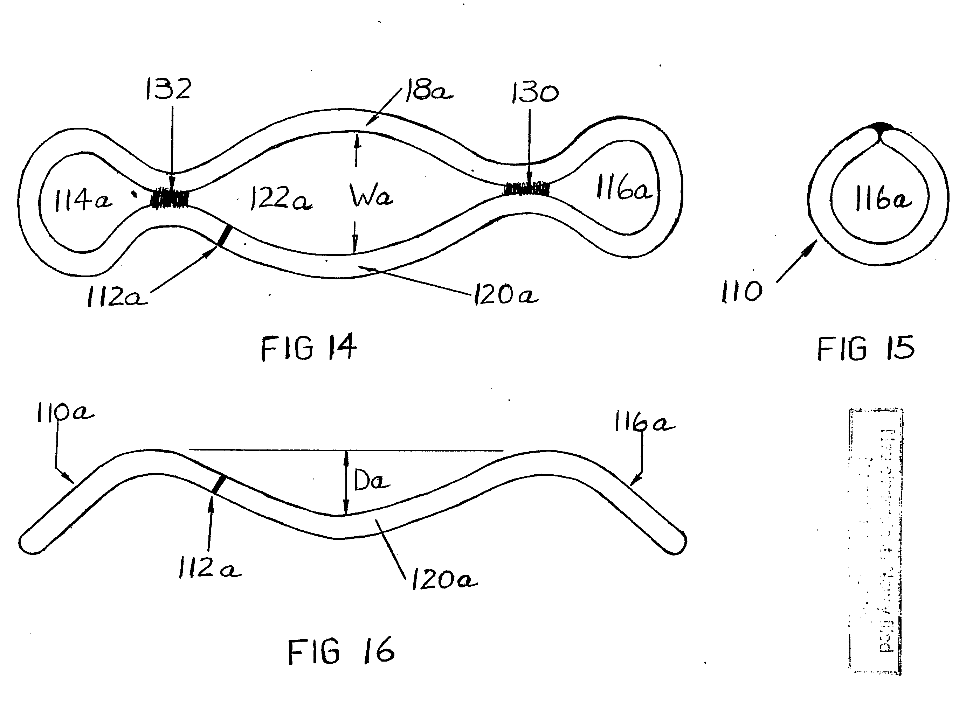

The rope retainer 110a shown in Figs. 14,15 and 16 is similar to the rope retainer 110 and its corresponding features are indicated as 112a,114a,116a etc. Briefly, the rope retainer 110a, which is also formed from 0.45 cm stainless steel wire, comprises, spaced loops 114a, and 116a constituting the aforementioned rope guide sections with lengths of the wire 118a and 120a providing the said reaction surfaces and defining an aperture 122a therebetween. The lengths 118a and 120a differ from lengths 118 and 120 in that they are curved on an arc which subtends at an angle of around 60° such that the width Wa of the aperture 122a increases as the depth Da increases.

In common with the retainer 110, the opposed ends of lengths 118a and 120 are interconnected at 130 and 132 e.g. by welding thereby enhancing the strength of the retainer.

In use, the rope retainer 110a is employed in a similar manner to that previously described for rope retainer 110.

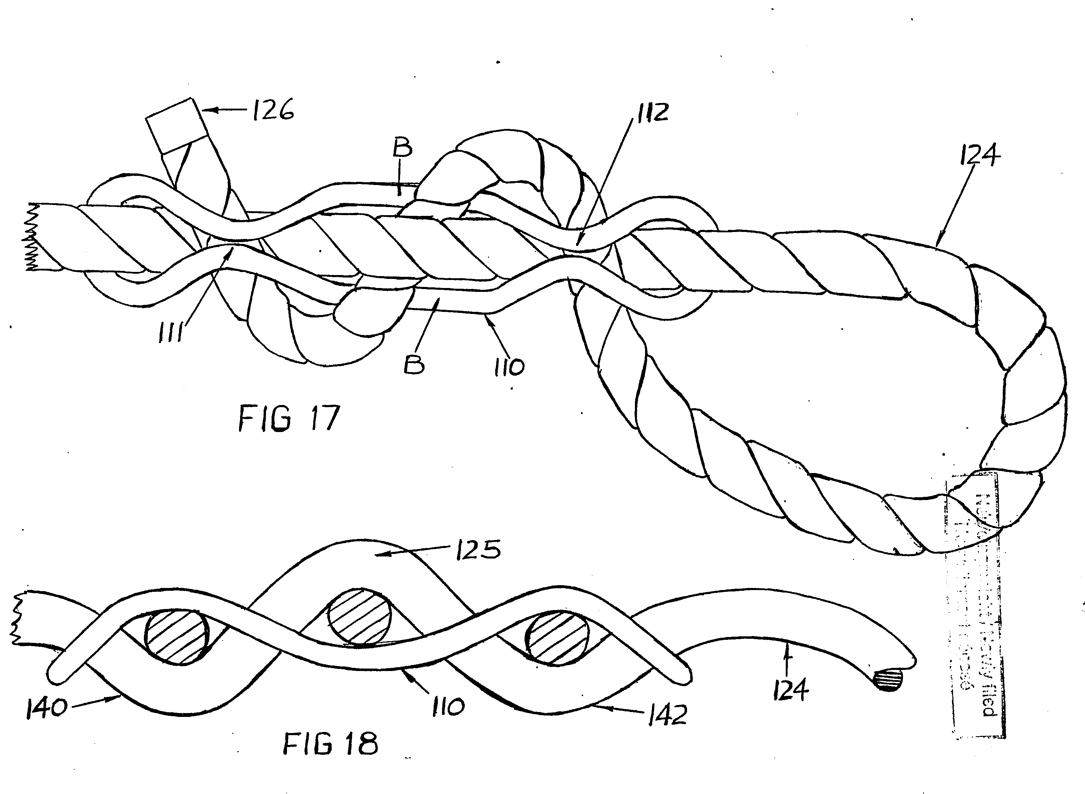

Figs. 17 and 18 illustrate an alternative way in which the rope can be threaded through retainer 110 for additional security. Instead of merely passing the end 126 of the rope between the reaction surfaces B and the rope section 125 as in Fig. 3, an end is also threaded between further sections, 140,142 and the portions of the retainer welded at 11,12. A similar rope threading arrangement can be achieved with the retainer 110a shown in Figs. 14 to 16. If desired, the end of the rope may be threaded between the surfaces B and section 125 and between only one of the sectors 140,141 and the adjacent welded portion of the retainer.

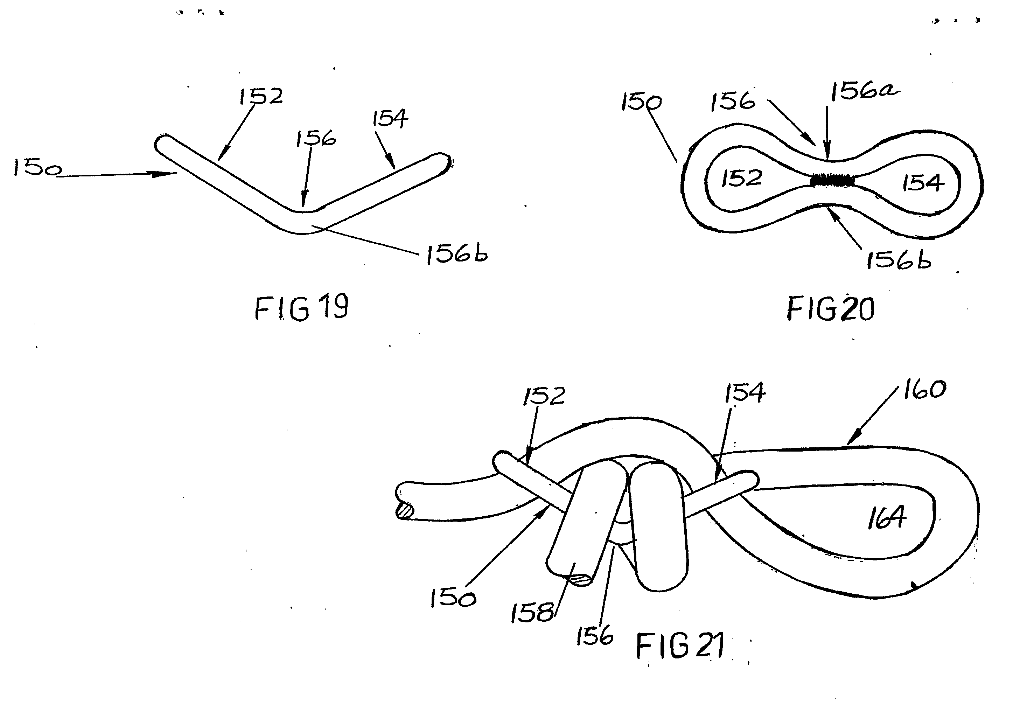

Figs. 19 and 20 show a further rope retainer 150 in accordance with the invention. The rope retainer 150, which is formed from 5 mm steel wire, comprises two loops 152 and 154 and an intermediate reaction surface 156 formed by welded adjacent wire sections 156a and 156b.

In use, an end 158 of a rope 160 is passed through loops 152 and 154 and passed between an intermediate section 162 of the rope and the reaction surface to form a loop 164 as shown in Fig. 21.

The retainer 150 is advantageous in that it is of light weight construction.

The term "wire" used herein also covers tubular materials, e.g. tubular steel, and plastics.

The term "rope" as used herein embraces cable, and similar elements as well as filamentary elements such as string and wire.

## Claims

1. A retainer for rope comprising two spaced apart rope guide sections, and a reaction surface between the guide sections whereby in use, the rope passes through the guide sections and an element passes over the reaction surface so as to deflect the rope transversely whereby axial movement of the rope through the retainer is inhibited.

2. A retainer according to claim 1 in which the reaction surface comprises an edge having a portion arranged to extend transverse to the rope.

3. A retainer according to Claim 1 or 2 in which a pair of reaction surfaces is provided.

4. A retainer according to Claim 3 in which the two reaction surfaces are spaced apart so as to lie one each side of the rope axis.

5. A retainer according to any preceding claim in which the element comprises a tail portion of said rope.

6. A retainer according to any preceding claim in which the reaction surface includes a section which frictionally engages the deflected portion of the rope.

7. A retainer according to any preceding claim in which at least one rope guide section is formed by an elongate section of material defining at least a partial loop.

8. A retainer according to Claim 7 in which both of the rope guide sections are formed from elongate sections of material.

9. A retainer according to Claim 8 in which the entire retainer is formed from an elongate section of material.

10. A retainer according to Claim 9 in which the ends of the elongate sections forming the retainer are joined together.

11. A retainer according to any one of Claims 1 to 8 which the rope guide sections are tubular.

12. A retainer according to Claim 11 in which a reaction surface is defined by an edge of an aperture formed in a wall of the tube.

13. A retainer according to Claim 12 in which the aperture is formed so as to define substantially arcuate edge sections.

FIG 1

FIG 2

FIG 3

FIG 4

FIG 5

FIG 6

0 262 763

FIG 7

FIG 8

0 262 763

FIG 9

FIG 10

0 262 763

FIG 11

FIG 12

FIG 13

0 262 763

FIG 14

FIG 15

FIG 16

0 262 763

126

B

112

124

111

B

110

**FIG 17**

0 262 763

125

140

110

142

124

**FIG 18**

FIG 19

FIG 20

FIG 21

0 262 763